# EUROPÄISCHE PATENTSCHRIFT

(11) **EP 3 716 758 B1**
(45) Veröffentlichungstag und Bekanntmachung des Hinweises auf die Patenterteilung: **20.04.2022**
(21) Anmeldenummer: 18815106.2
(22) Anmeldetag: 21.11.2018
(51) Int. Cl.: A01K 7/06, A01K 39/02

(54) **TIERTRÄNKE, INSBESONDERE FÜR SCHNABELTIERE**
DRINKING TROUGH, IN PARTICULAR FOR BEAK ANIMALS
ABREUVOIR, EN PARTICULIER POUR ANIMAUX À BEC

(30) Priorität: 29.11.2017 DE 102017011041
(43) Veröffentlichungstag der Anmeldung: 07.10.2020
(73) Patentinhaber: LUBING Maschinenfabrik Ludwig Bening GmbH & Co. KG, 49406 Barnstorf (DE)
(72) Erfinder: HAWK, Chris, Hixson, TN 37343 (US); ABELN, Michael, 49586 Halen (DE)
(74) Vertreter: Möller, Friedrich
(86) Internationale Anmeldenummer: PCT/EP2018/000522
(87) Internationale Veröffentlichungsnummer: WO 2019/105579

(56) Entgegenhaltungen:
- EP-A1- 2 767 158
- DE-U1-202005 020 411
- US-A- 4 793 291

## Beschreibung

Die Erfindung betrifft eine Tiertränke, insbesondere für Schnabeltiere, gemäß dem Oberbegriff des Anspruchs 1.

Tiertränken für Schnabeltiere, wie Hühner, Enten, Puten, Gänse, Küken oder anderes Geflügel, verfügen über eine längliche Wasserversorgungsleitung, der vorzugsweise mehrere Tränkeventile zugeordnet sind. Bei einer aus der EP 2 767 158 A1 bekannten Tiertränke sind den Tränkeventilen Betätigungseinheiten mit länglichen rohr- oder stangenartigen Betätigungsmitteln zugeordnet. Zum Öffnen eines Tränkeventils verkippen bzw. verschwenken die Schnabeltiere das längliche Betätigungsmittel. Durch eine dem Betätigungsmittel zugeordnete zusätzliche Kugel wird beim Verschwenken des Betätigungsmittels ein mit einem unteren Endbereich aus dem Gehäuse des Tränkeventils herausragender Ventilstift angehoben und dadurch das Tränkeventil geöffnet.

Es hat sich gezeigt, dass die vorstehend beschriebene Tiertränke aufgrund der dem Betätigungsmittel zugeordneten Kugel verschiedene Nachteile hat.

Ausgehend vom Vorstehenden liegt der Erfindung die Aufgabe zugrunde, eine Tiertränke für insbesondere Schnabeltiere zu schaffen, die die in der Praxis auftretenden Nachteile bekannter Tiertränken mit Betätigungseinheiten nicht aufweist.

Eine Tiertränke zur Lösung dieser Aufgabe weist die Merkmale des Anspruchs 1 auf. Demnach ist es vorgesehen, dem gleichen Betätigungsmittel zwei vorzugsweise gleichartige Tränkeventile zuzuordnen, insbesondere gegenüberliegenden Seiten des Betätigungsmittels. Dann sind dem oberen Ende des Betätigungsmittels zwei an gegenüberliegenden Seiten desselben seitlich abstehende Arme zugeordnet. Die beiden Arme sind insbesondere mit dem Betätigungsmittel fest und/oder einstückig verbunden. Bei der Betätigungseinheit mit einem zwei entgegengesetzt gerichtete Arme aufweisenden Betätigungsmittel korrespondiert vorzugsweise jeder Arm mit einem Tränkeventil, insbesondere dem unteren Ende seines Ventilstifts. Es betätigt so jeweils ein Arm ein Tränkeventil. Dadurch können durch Verschwenken des Betätigungsmittels die beiden diesem zugeordneten Tränkeventile wechselweise betätigt, insbesondere geöffnet und/oder geschlossen werden. Das geschieht derart, dass beim Verschwenken des Betätigungsmittels ein Arm hochbewegt wird zum Anheben des Ventilstifts des ihm zugeordneten Tränkeventils und der gegenüberliegende Arm sich nach unten, vom ihm zugeordneten Tränkeventil wegbewegt und somit dieses Tränkeventil nicht betätigt. Dazu ist das Betätigungsmittel mit den beiden am oberen Ende desselben fest angeordneten Armen in die entgegengesetzte Richtung verschwenkbar.

Bevorzugt korrespondiert der Ventilstift mit dem jeweiligen Arm des Betätigungsmittels, Insbesondere erstreckt sich jeder Arm bis zu einem unteren freien Ende des Endbereichs des Ventilstifts des jeweiligen Tränkeventils. Infolge dessen ist der jeweilige Ventilstift von dem ihm zugeordneten Arm zum Öffnen des Tränkeventils anhebbar. Ein seitliches Verkippen findet dadurch nicht mehr oder mindestens in keinem nennenswerten Umfang mehr statt. Die Folge ist, dass eine punktuelle bzw. einseitige Abnutzung des Dichtsitzes zwischen dem Ventilstift und dem Gehäuse des jeweiligen Tränkeventils vermieden oder mindestens reduziert wird. Dadurch verlängert sich die Lebensdauer des Tränkeventils.

Bei einer vorteilhaften Ausgestaltung der Tiertränke ist das Betätigungsmittel um eine quer zu seiner Längsmittelachse verlaufende, insbesondere horizontale, Drehachse verschwenkbar. Alternativ oder zusätzlich kann es vorgesehen sein, dass die Drehachse quer zur im Wesentlichen horizontalen Längsachse der Wasserversorgungsleitung verläuft. Die horizontale Drehachse ermöglicht ein pendelartiges Verschwenken des Betätigungsmittels, wobei jeder dem oberen Ende des Betätigungsmittels zugeordneter Arm zusammen mit dem Betätigungsmittel verschwenkt wird zum Öffnen des Tränkeventils. Das Schließen des Tränkeventils erfolgt durch Loslassen des Betätigungsmittels, wodurch es mit dem daran angeordneten Arm selbsttätig in die Ausgangslage zurückkehrt und dadurch der Ventilstift zum Schließen des Tränkeventils freigegeben wird.

Bevorzugt stehen die Arme im Wesentlichen quergerichtet zur Längsmittelachse des Betätigungsmittels seitlich von demselben ab. Dadurch bilden die Arme einen Kragarm am oberen Ende des Betätigungsmittels. Insbesondere verläuft jeder Arm dabei in Längsrichtung der Wasserversorgungsleitung.

Bei einer bevorzugten Ausgestaltungsart der Tiertränke ist das Betätigungsmittel als ein länglicher Stab oder ein längliches Rohr ausgebildet, das am oberen, zum mindestens einen Tränkeventil bzw. der Wasserversorgungsleitung weisenden Ende mit dem betreffenden Arm vorzugsweise einstückig verbunden ist. Dann bilden das Betätigungsmittel und die ihm zugeordneten Arme zusammen eine Betätigungseinrichtung und/oder die Betätigungseinheit.

Eine in vorteilhafter Weise weitergebildete Tiertränke zeichnet sich dadurch aus, dass die Drehachse, um die das Betätigungsmittel mit den Armen verschwenkbar ist, einem ortsfest unter der Wasserversorgungsleitung angeordneten Drehlager zugeordnet ist. Vorzugsweise ist das Drehlager an der Wasserversorgungsleitung lösbar befestigt. Alternativ oder zusätzlich kann es vorgesehen sein, dass das Drehlager entweder direkt mit der Wasserversorgungsleitung verbunden ist oder indirekt mit einer Aufhängung der Wasserauffangschale, die mit der Wasserversorgungsleitung verbunden ist. Bei der Zuordnung des Drehlagers zur Aufhängung der Wasserauffangschale kann das Drehlager unlösbar mit der Aufhängung verbunden sein. Dann ist die Betätigungseinheit zusammen mit der Wasserauffangschale von der Wasserversorgungsleitung lösbar.

Die wenn auch gegebenenfalls lösbare ortsfeste Zuordnung des Drehlagers zur Wasserversorgungsleitung führt dazu, dass das Betätigungsmittel zusammen mit den diesem am oberen Ende zugeordneten Armen um eine definierte Stelle verschwenkbar ist und außerdem die Verschwenkung um die Drehachse nur in einer Ebene erfolgen kann, vorzugsweise eine vertikale Längsmittelachse durch die Längsmittelachse der Wasserversorgungsleitung. Dadurch können das Betätigungsmittel und die Arme, die zusammen die Betätigungseinrichtung bzw. Betätigungseinheit bilden, gemeinsam nach Art eines mehrarmigen Hebels um die vorzugsweise horizontale Drehachse in der vertikalen Längsmittelebene verschwenkt werden, wodurch vom jeweiligen Arm das ihm zugeordnete Tränkeventil durch überwiegend senkrechte Aufwärtsbewegung seines Ventilstifts geöffnet wird. Durch diese mindestens größtenteils erfolgende Linearbewegung des Ventilstifts wird der Verschleiß des Tränkeventils durch partielle bzw. einseitige Abnutzung wirksam vermieden.

Vorteilhafterweise ist das Tränkeventil derart weitergebildet, dass der oder jeder am oberen Ende des Betätigungsmittels angeordnete Arm als eine offene Rinne ausgebildet ist. Weil sich der jeweilige Arm mindestens bis zum ihm zugeordneten Tränkeventil, vorzugsweise etwas darüber hinaus, erstreckt, gelangt das aus dem geöffneten Tränkeventil austretende Wasser in die Rinne. Indem zum Öffnen des Tränkeventils das Betätigungsmittel mit dem oder jedem die Rinne aufweisenden Arm verschwenkt wird, erhält die Rinne einen zum Betätigungsmittel hin leicht abwärts geneigten Verlauf. Dadurch wird aus dem Tränkeventil austretendes Wasser gezielt und vorzugsweise vollständig zum Betätigungsmittel geleitet. Spritzer werden dann vermieden.

Um zu verhindern, dass bei zurückgeschwenktem Betätigungshebel und dann etwa horizontal verlaufender Rinne restliches in der Rinne sich befindendes Wasser nicht über das freie Ende des jeweiligen Arms abfließen kann, ist die Rinne bevorzugt an diesem freien Ende des jeweiligen Arms geschlossen. Dann fließt auch restliches Wasser bei zurückgeschwenktem, unbetätigten Betätigungsmittel aus der Rinne zum Betätigungsmittel ab. Dazu kann es vorgesehen sein, dass bei sich in der Ruhestellung befindlicher unverschwenkter Betätigungseinheit der Boden der Rinne leicht zum rohr- bzw. stangenartigen Betätigungsmittel hin verläuft.

Bevorzugt ist es auch vorgesehen, dass der Boden der Rinne des jeweiligen Arms mit dem unteren freien Ende des aus dem Tränkeventil nach unten herausragenden Ventilstifts korrespondiert. Dann wird beim Verschwenken des Betätigungsmittels und dem dadurch erfolgenden Hochbewegen des Endes des Arms der Ventilstift vom Boden der Rinne zum Öffnen des Tränkeventils hochbewegt, und zwar vorzugsweise nur oder im Wesentlichen nur axial entlang der Längsmittelachse des Tränkeventils.

Damit gezielt aus dem Tränkeventil austretendes Wasser in das rohrartig ausgebildete Betätigungsmittel gelangen oder außen am stangenartig ausgebildeten Betätigungsmittel entlangfließen kann, ist die Rinne des oder jedes Arms an dem oberen Endbereich des Betätigungsmittels, insbesondere etwas oberhalb seiner oberen Stirnseite, herangeführt. Dadurch ist sichergestellt, dass das Wasser aus dem Tränkeventil unter Zuhilfenahme der Rinne gezielt von oben auf oder in das Betätigungsmittel gelangt. Einem Verspritzen von Wasser wird dadurch wirksam entgegengewirkt.

Bei einem stab- oder stangenartig ausgebildeten Betätigungsmittel ist es gemäß einer vorteilhaften Weiterbildung der Tiertränke vorgesehen, dass das Betätigungsmittel mindestens über einen Großteil seiner Länge ein Querschnittsprofil aufweist, das eine oder zwei außenseitige Rillen bildet bzw. aufweist. Diese Rille verläuft vorzugsweise parallel zur Längsmittelachse des stabartigen Betätigungsmittels. Durch die oder die jeweilige Rille kann Wasser aus der Rinne des betreffenden Arms gezielt am stabförmigen Betätigungsmittel herunterrieseln. Das Wasser gelangt dadurch geführt in die Wasserauffangschale. Das wirkt auch einem unkontrollierten Wasseraustritt entgegen.

Ein bevorzugtes Ausführungsbeispiel der erfindungsgemäßen Tiertränke wird nachfolgend anhand der Zeichnung näher erläutert. In dieser zeigen:
- Fig. 1: eine schematische Seitenansicht eines Teils der Tiertränke,
- Fig. 2: eine perspektivische Darstellung eines Teils der Tiertränke der Fig. 1 im Bereich Tränkestelle mit einer Wasserauffangschale,
- Fig. 3: eine Ansicht der Wasserabgabestelle der Fig. 2 von der Seite,
- Fig. 4: eine Draufsicht auf die Wasserabgabestelle der Fig. 2,
- Fig. 5: einen vertikalen Längsschnitt durch die Wasserabgabestelle der Fig. 2 bei geschlossenen Tränkeventilen, und
- Fig. 6: eine Darstellung gemäß der Fig. 5 bei einem geöffneten Tränkeventil.

Die in den Figuren gezeigte Tiertränke ist als sogenannte Strangtränke für die Bodenhaltung von Schnabeltieren ausgebildet. Die Tiertränke ermöglicht es allen Arten von Schnabeltieren, insbesondere Hühnern, Küken, Enten und Ähnlichen, ihren Wasserbedarf selbsttätig zu decken. Die Tiertränke eignet sich auch für junge Schnabeltiere, wie Küken.

Jede der in den Figuren gezeigte Tiertränke verfügt über eine langgestreckte, rohrartige Wasserversorgungsleitung 10. Entlang der Wasserversorgungsleitung 10 sind vorzugsweise mit gleichen Abständen voneinander beabstandete Tränkestellen 11 vorgesehen. Im gezeigten Ausführungsbeispiel sind alle Tränkestellen 11 gleich ausgebildet.

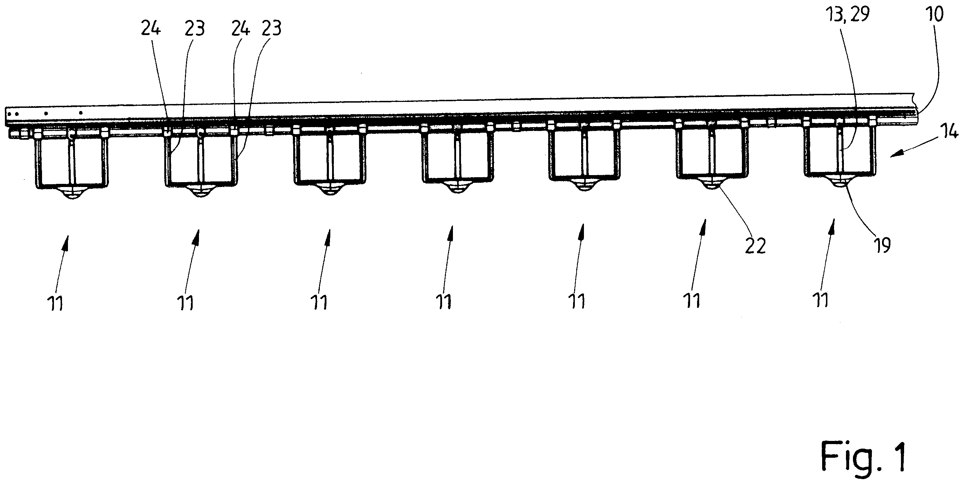

Die Wasserversorgungsleitung 10 ist an in der Fig. 1 nicht gezeigten Trägerseilen in einem Stall vorzugsweise horizontalgerichtet oder gegebenenfalls mit geringem Gefälle im vorgesehenen geringen Abstand zum Boden angeordnet.

Jede der hier gleich ausgebildeten Tränkestellen 11 weist im gezeigten Ausführungsbeispiel zwei paarweise mit geringem Abstand nebeneinander angeordnete, gleiche Tränkeventile 12, eine Betätigungseinheit 13 und eine Wasserauffangschale 14 auf. Die beiden benachbarten Tränkeventile 12 der gleichen Tränkestelle 11 können selektiv einzeln und/oder abwechselnd von der ihnen zugeordneten gleichen einzigen Betätigungseinheit 13 geöffnet werden. Dazu ist der Abstand der beiden Tränkeventile 12 jeder Tränkestelle 11 so gering, dass die Betätigungseinheit 13 sich dazwischen anordnen lässt und beide Tränkeventile 12 sich im Einflussbereich der gleichen, einzigen Betätigungseinheit 13 der Tränkestelle 11 befinden. Dieser Abstand ist wesentlich kleiner als der Abstand der Tränkeventile zwischen benachbarten Tränkestellen 11.

Jedes der gleich ausgebildeten Tränkeventile 11 weist ein Gehäuse 15 und einen teilweise unten aus dem Gehäuse 15 herausragenden Ventilstift 16 auf. Das jeweilige Tränkeventil 12 ist mit einem oberen Teil seines Gehäuses 15 von unten in die Wasserversorgungsleitung 10 eingeschraubt und abgedichtet. Der Ventilstift 16 ragt mit einem unteren Endbereich 17 unten aus dem Gehäuse 15 heraus. Dieser Endbereich 17 wird von einem unteren, freien Ende 18 des Ventilstifts 16 begrenzt. Vom unteren Ende 18 des Endbereichs 17 her ist der Ventilstift 16 des jeweiligen Tränkeventils 12 betätigbar. Die parallelen Längsmittelachsen der beiden Tränkeventile 12 der jeweiligen Tränkestelle 11 verlaufen senkrecht und/oder im rechten Winkel zur vorzugsweise horizontalen Wasserversorgungsleitung 10.

Die Wasserauffangschale 14 verfügt im gezeigten Ausführungsbeispiel über ein unteres Schalenteil 19 mit einem kreisförmigen Rand 20. Der Rand 20 kann aber auch Verläufe aufweisen, beispielsweise einen elliptischen Verlauf. Das rotationssymmetrisch ausgebildete Schalenteil 19 verfügt über eine Bodenwand 21 mit einem napf- bzw. glockenartigen Querschnitt. Der Krümmungsradius der Bodenwand 21 nimmt vom Rand 20 zur tiefsten Mitte hin kontinuierlich zu. Dadurch weist ein mittlerer Bereich des Schalenteils 19 einen tiefen Napf 22 auf. Die hier gezeigte Wasserauffangschale 14 verfügt über zwei von diametral gegenüberliegenden Stellen des Rands 20 ausgehende Haltearme 23. Diese verlaufen parallel zueinander senkrecht vom Schalenteil 19 bis zur vorzugsweise horizontalen Wasserversorgungsleitung 10. Am oberen Ende sind die Haltearme 23 mit Halteclips 24 zur lösbaren Befestigung der Wasserauffangschale 14 unter der Wasserversorgungsleitung 10 versehen. Im gezeigten Ausführungsbeispiel sind die Halteclips 24 nicht direkt an den oberen Enden der Haltearme 23 angeordnet, sondern an den Enden eines sich längs unter der Wasserversorgungsleitung 10 im Bereich der Tränkestelle 11 erstreckenden Stegs 25. Unter dem Steg 25 sind an gegenüberliegenden Endbereichen desselben Rastmittel 26 angeordnet, die dazu dienen, die oberen Enden der Haltearme 23 rastend und gegebenenfalls lösbar mit dem Steg 25 zu verbinden.

Der Steg 25 der Wasserauffangschale 14 ist mit zwei gleich ausgebildeten Durchlässen 27 zum Hindurchtritt eines nach unten gegenüber der Wasserversorgungsleitung 10 vorstehenden unteren Teils des Gehäuses 15 jedes der paarweise der Tränkestelle 11 zugeordneten Tränkeventile 12 versehen. Der Durchlass 27 ist von jeweils einem umlaufenden Kragen 28 umgeben. Jeder Kragen 28 steht gegenüber dem Steg 25 nach unten vor. Die Durchlässe 27 und die Kragen 28 sind so ausgebildet, dass sie die unten aus der Wasserversorgungsleitung 10 herausragenden Teile der Gehäuse 15 der Tränkeventile 12 im Wesentlichen spielfrei umgeben. Dadurch wird die Wasserauffangschale 14 ortsfest und unbeweglich, insbesondere unverschieblich, von den Tränkeventilen 12 an und unter der Wasserversorgungsleitung 10 fixiert. Insbesondere wird dadurch eine Relativbewegung, insbesondere Relatiwerschiebung, der Wasserauffangschale 14 längs zur Wasserversorgungsleitung 10 relativ zu den Tränkeventilen 12 verhindert.

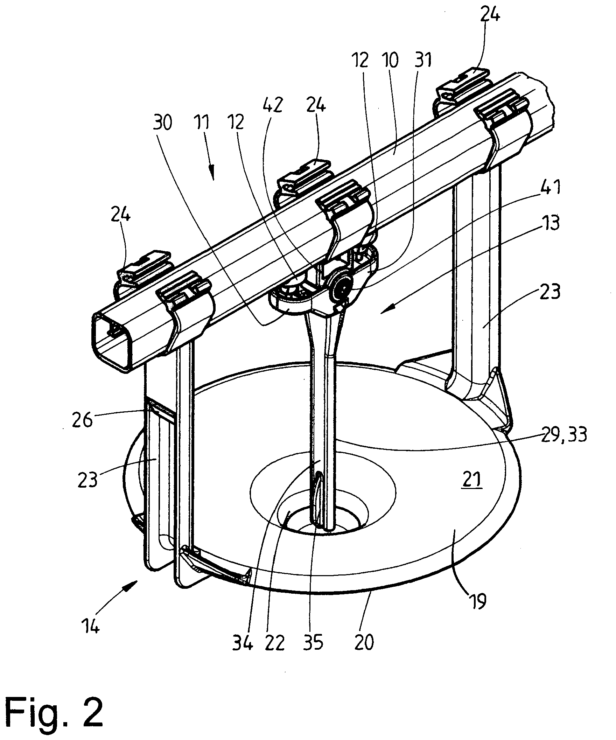

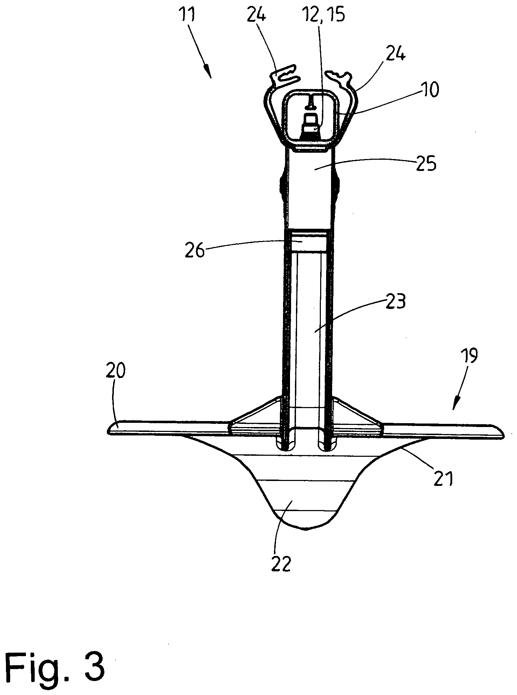

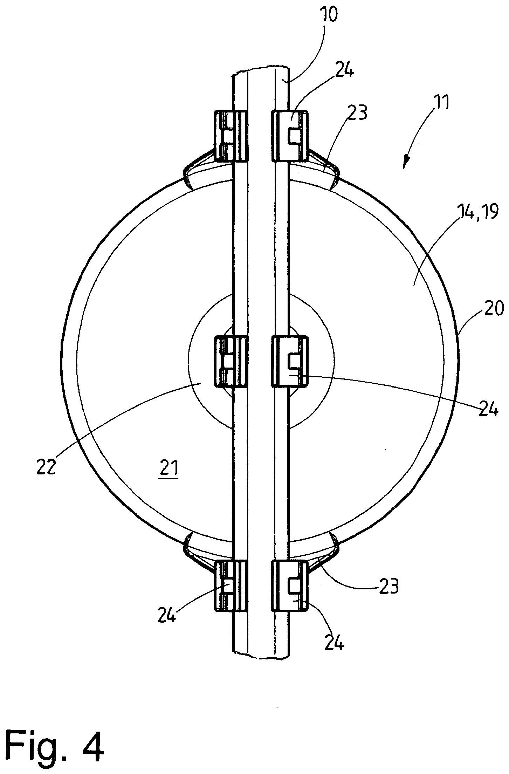

Die Betätigungseinheit 13 verfügt über ein längliches Betätigungsmittel und gemäß dem Ausführungsbeispiel der Fig. 2 bis 6 über zwei Arme 30 und 31. Die beiden Arme 30, 31 sind dem Betätigungsmittel 29 zugeordnet, vorzugsweise hieran einstückig angeformt. Das Betätigungsmittel 29 verfügt somit über die beiden Arme 30 und 31. Die Arme 30 und 31 sind gleich ausgebildet, jedoch unterschiedlich gerichtet, indem sie zu gegenüberliegenden Seiten vom Betätigungsmittel 29 kragarmartig abstehen. Dabei liegen die Längsmittelachsen beider Arme 30, 31 auf einer gemeinsamen geradlinigen Achse. Diese gemeinsame Achse schneidet senkrecht eine Längsmittelachse 32 des Betätigungsmittels 29. Die Längsmittelachse 32 des Betätigungsmittels 29 und die gemeinsame Achse beider Arme 30 und 31 liegen in einer vertikalen Ebene, die durch eine Längsmittelachse der Wasserversorgungsleitung 10 verläuft.

Im gezeigten Ausführungsbeispiel ist das längliche Betätigungsmittel 29 als ein gerader, länglicher Stab 33 ausgebildet. Der massive Stab 33 ist mit einem unrunden Querschnitt versehen. Im gezeigten Ausführungsbeispiel ist mindestens ein sich etwa über die halbe Länge des Stabs 33 erstreckender Teil derselben an gegenüberliegenden Seiten, von denen die Arme 30, 31 ausgehen, mit mindestens einer parallel zur Längsmittelachse 32 des Betätigungsmittels 29 verlaufenden Rille 34 versehen.

Am unteren Ende des als Stab 33 ausgebildeten Betätigungsmittels 29 sind auf gegenüberliegenden Seiten, dort wo die Rillen 34 sind, Flügel 35, vorzugsweise dünnwandige Flügel 35, vorgesehen. Diese erstrecken sich über einen unteren Endbereich des Stabs 33 bis hin zum Ende desselben. Durch die Flügel 35 können die Enden der gegenüberliegenden Rillen 34 geteilt sein, so dass links und rechts von jedem Flügel 35 eine Rille 34 entsteht. Die Flächen der Flügel 35 liegen in der vertikalen Ebene, die durch die Längsmittelachse 32 des Stabs 33 und durch die Längsmittelachse der Wasserversorgungsleitung 10 verläuft.

Jeder der gleich ausgebildeten Arme 30, 31 ist im Querschnitt etwa U-förmig ausgebildet, so dass in jedem Arm 30, 31 eine oben offene Rinne 36 entsteht. Durch den U-förmigen Querschnitt ist die Rinne 36 jedes Arms 30, 31 beidseitig von einer aufrechten Seitenwand 37 begrenzt. Die beiden gegenüberliegenden Seitenwände 37 jeder Rinne 36 verlaufen parallel zueinander. Die vom Betätigungsmittel 29 weggerichteten freien Enden der Rinnen 36 sind durch eine sich zwischen den Seitenwänden 37 erstreckende Stirnwand 38 verschlossen.

Die Tiefe der Rinne 36 nimmt von ihrer jeweiligen Stirnwand 38 zum Betätigungsmittel 29 hin zu durch einen entsprechend gewölbten Verlauf einer Bodenwandung 39 der Rinne 36. Dadurch befindet sich die tiefste Stelle der Rinne 36 dort, wo sie in den Stab 33 des Betätigungsmittels 29 übergeht bzw. am Stab 33 endet, also etwa im Bereich der Längsmittelachse 32 des Betätigungsmittels 29.

An der tiefsten Stelle weist die Rinne 36 jedes Arms 30, 31 einen an das Betätigungsmittel 29 angrenzenden Durchbruch 40 auf. Durch diesen Durchbruch 40 kann aus dem jeweiligen Tränkeventil 12 austretendes Wasser von der tiefsten Stelle der Rinne 36 in die Rille 34 auf der entsprechenden Seite des Betätigungsmittels 29, insbesondere ihres Stabs 33, abfließen. Dazu ist der Durchbruch 40 jedes Arms 30, 31 so bemessen und angeordnet, dass er in der jeweiligen Rille 34 mündet bzw. nach oben hin an die Rille 34 anschließt. Es kann so Wasser aus der Rinne 36 des jeweiligen Arms 30 oder 31 ungehindert von oben in die jeweilige Rille 34 strömen. Das Wasser fließt dann mindestens größtenteils in der jeweiligen Rille 34 des Betätigungsmittels 29 nach unten. Dabei teilt sich am unteren Ende des Betätigungsmittels 29 der Wasserfluss an den Flügeln 35 auf. Das Wasser fließt dabei gleichmäßig durch die Rillen 34 und an dem jeweiligen Flügel 35 entlang zum Ende des das Betätigungsmittel 29 bildenden Stabs 33, wo es in der Wasserauffangschale 14, insbesondere dem unteren Napf 22 derselben, aufgefangen wird.

Die Betätigungseinheit 13, insbesondere das Betätigungsmittel 29 mit den beiden diesem zugeordneten gegenüberliegenden Armen 30 und 31, ist um eine horizontale Drehachse 41 verschwenkbar. Diese Drehachse 41 verläuft quer zur Längsmittelachse der Wasserversorgungsleitung 10, und zwar mit Abstand unterhalb derselben. Die Drehachse 41 verläuft dabei ebenso wie die Wasserversorgungsleitung 10 horizontal. Im gezeigten Ausführungsbeispiel liegt die Drehachse 41 etwa zwischen den unteren Endbereichen 17 der Ventilstifte 16 der beiden Tränkeventile 12. Vorzugsweise liegt die Drehachse 41 auf einer gedachten horizontalen Verbindungslinie zwischen den unteren Enden 18 der Ventilstifte 16 der beiden Tränkeventile 12, wobei die Drehachse 41 diese gedachte Verbindungslinie rechtwinklig schneidet.

Die Betätigungseinheit 13 mit dem Betätigungsmittel 29 und den beiden daran angeordneten Armen 30, 31 ist um die Drehachse 41 schwenkbar an einem ortsfesten Drehlager 42 gelagert. Das Drehlager 42 wiederum ist ortsfest, aber lösbar zwischen den beiden Tränkeventilen 12 der jeweiligen Tränkestelle 11 unter der Wasserversorgungsleitung 10 befestigt. Im gezeigten Ausführungsbeispiel ist das Drehlager mit dem Steg 25 unter der Wasserversorgungsleitung 10 fest verbunden, vorzugsweise einstückig angeformt. Das Drehlager 42 verfügt über eine auf der Drehachse 41 liegende Durchgangsbohrung 43 oder alternativ zwei gegenüberliegende Sackbohrungen. In die Durchgangsbohrung 43 bzw. die Sackbohrungen greifen korrespondierend dazu ausgebildete Achsstummel 49 an gegenüberliegenden Seitenwänden 37 und 38 der Arme 30, 31 ein.

Der Schwenkweg des um die Drehachse 41 schwenkbaren Betätigungsmittels 29 ist begrenzt von den gegenüberliegenden Flügeln 35 am unteren Ende des Stabs 33 des Betätigungsmittels 29, nämlich seines Stabs 33, und von der Bodenwand 21 im Bereich des tiefen Napfs 22 des Schalenteils 19 der Wasserauffangschale 14. Der Schwenkwinkel der Betätigungseinheit 13 ist so gewählt, dass bei maximaler Auslenkung des Stabs 33 des Betätigungsmittels 29 zu einer Seite eines der beiden Tränkeventile 12 der jeweiligen Tränkestelle 11 maximal geöffnet wird durch vertikales oder zumindest im Wesentlichen vertikales Anheben des Ventilstifts 16. Dabei dient die Begrenzung des Schwenkwegs des Stabs 33 gleichzeitig dazu, ein unzulässig weites Einschieben des Ventilstifts 16 in das Gehäuse 15 des betreffenden Tränkeventils 12 zu verhindern.

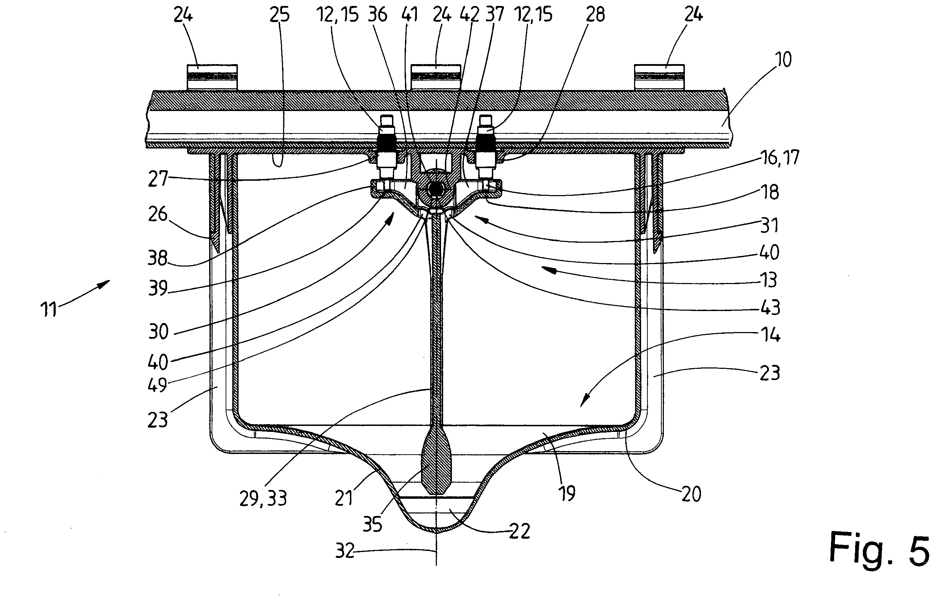

Damit beim Öffnen des jeweiligen Tränkeventils 12 der Ventilstift 16 nicht verkippt, sondern nur oder im Wesentlichen nur angehoben wird, ist jeder Arm 30, 31 so ausgebildet, dass er mit einer im Wesentlichen nur senkrechten Kraftkomponente auf das untere Ende des Ventilstifts 16 einwirkt und diesen nur senkrecht oder im Wesentlichen senkrecht hochdrückt. Im gezeigten Ausführungsbeispiel ist zu diesem Zweck der mit dem unteren Ende des Ventilstifts 16 des jeweiligen Tränkeventils 12 korrespondierende Abschnitt der Bodenwandung 39 mit einem solchen Verlauf versehen, dass von diesem Abschnitt der Bodenwand 21 des jeweiligen Arms 30, 31 der Ventilstift 16 zum Öffnen des jeweiligen Tränkeventils 12 im Wesentlichen nur mit einer auf seiner Längsmittelachse liegenden Kraftkomponente angehoben wird. Zu diesem Zweck verläuft bei sich in der Ruhestellung befindenden, unausgelenkten Betätigungsmittel 29 der mit dem unteren Ende des Ventilstifts 16 des jeweiligen Tränkeventils 12 korrespondierende Abschnitt der Bodenwandung 39 jedes Arms 30, 31 etwa horizontal. Dementsprechend verläuft die Längsmittelachse 32 des Stabs 33 bei unbetätigtem Betätigungsmittel 29 in senkrechter Richtung (Fig. 5).

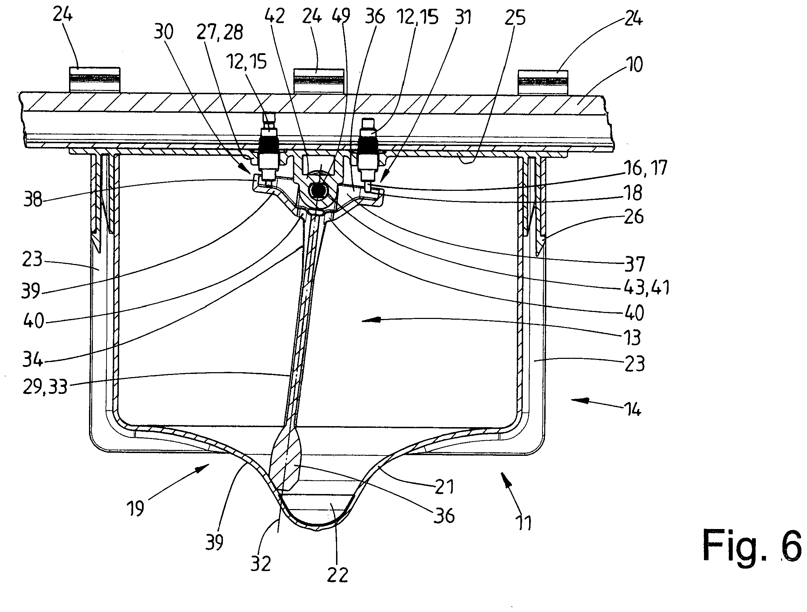

Die Tränkeventile 12 der Tränkestelle 11 können wechselweise geöffnet werden durch Verschwenken des Betätigungsmittels 29 der Betätigungseinheit 13 in entgegengesetzte Richtungen um die Drehachse 41. Bezogen auf die Darstellung in der Fig. 6 ist die Betätigungseinheit 13 um die Drehachse 41 im Uhrzeigersinn verschwenkt, wodurch das linke Tränkeventil 12 geöffnet wird. Das sich auf der anderen Seite des Tränkeventils 12 befindende Tränkeventil 12 bleibt dabei geschlossen. Die Betätigungseinheit 13 kann nach Art eines Pendels soweit ausgelenkt werden, bis das untere Ende des Stabs 33 mit einem Flügel 35 an der Bodenwand 21 im Bereich des Napfs 22 des Schalenteils 19 anliegt. Das Öffnen des Tränkeventils 12 erfolgt durch die Betätigungseinheit 13 durch ein vom Arm 30 erfolgendes Aufwärtsbewegen des Ventilstifts 16 entlang seiner Längsachse. Ein Verkippen des Ventilstifts 16 erfolgt dabei nicht oder allenfalls in nur sehr geringem und vernachlässigbarem Umfang.

Am Betätigungsmittel 29 ist die Betätigungseinheit 13 vom jeweiligen Schnabeltier verschwenkbar, indem dieses mit dem Schnabel gegen den Stab 33 des Betätigungsmittels 29 drückt, und zwar bevorzugt irgendwo im Bereich seiner unteren Hälfte. Das Schnabeltier kann den Stab 33 des Betätigungsmittels 29 nur soweit verkippen, bis dieser mit seinem unteren Ende an der Bodenwand 21 im Bereich des Napfs 22 des Schalenteils 19 anschlägt.

Wird durch die Betätigungseinheit 13 ein Tränkeventil 12 geöffnet, läuft das austretende Wasser durch die Rinne 36 des jeweiligen Arms 30, der momentan ein Tränkeventil 12 geöffnet hat, in Richtung zum Stab 33. Durch die betreffende Durchgangsbohrung 43 am Ende der Rinne 36 des betreffenden Arms 30 tritt das Wasser aus der Rinne 36 aus. Das Wasser läuft dann von oben nach unten am Stab 33 des Betätigungsmittels 29 entlang, um am Ende desselben in das Schalenteil 19 der Wasserauffangschale 14 zu gelangen. Dort kann das Schnabeltier das Wasser aufnehmen.

Lässt das Schnabeltier die Betätigungseinheit 13, insbesondere den Stab 33 desselben, los, gelangt die gesamte Betätigungseinheit 13 durch ihr Eigengewicht und das des Ventilstifts 16 selbsttätig wieder in ihre Ausgangslage (Fig. 5), in der die Längsmittelachse 32 des Stabs 33 des Betätigungsmittels 29 senkrecht verläuft und die Arme 30, 31 wieder horizontal ausgerichtet sind, wobei der unter dem unteren Ende 18 des jeweiligen Ventilstifts 16 anliegende Teil der Bodenwandung 39 jedes Arms 30, 31 horizontal verläuft.

Durch Verschwenken der Betätigungseinheit 13 gegen den Uhrzeigersinn wird das gegenüberliegende (rechte) Tränkeventil 12 geöffnet. Das geschieht auf gleiche Weise wie zuvor im Zusammenhang mit dem linken Tränkeventil 12 der Tränkestelle 11 beschrieben. Ebenso wird das rechte Tränkeventil 12 wieder geschlossen.

Es ist ein alternatives Ausführungsbeispiel denkbar, bei dem die Betätigungsmittel nicht als massive Stäbe ausgebildet sind, sondern als gerade, längliche Rohre unter dem Arm bzw. den Armen. Von der Rinne des jeweiligen Arms wird dann aus dem Tränkeventil austretendes Wasser direkt in das Innere des Rohrs geführt. Das Wasser strömt anschließend durch das Rohr, wo es am unteren Ende desselben in das Schalenteil der Wasserauffangschale gelangt.

Bei allen vorstehend beschriebenen Ausführungsbeispielen der Tiertränke sind die Betätigungseinheit einerseits und die Wasserauffangschale andererseits jeweils einstückig aus Kunststoff, insbesondere thermoplastischem Kunststoff, gebildet. Das Drehlager ist dabei bevorzugt einstückig an der jeweiligen Wasserauffangschale, insbesondere ihrem Steg unter der Wasserversorgungsleitung, angeformt. Gleiches gilt für die Halteclips und die Rastmittel.

**Bezugszeichenliste:**

| | | | |
|---|---|---|---|
| 10 | Wasserversorgungsleitung | 42 | Drehlager |
| 11 | Tränkestelle | 43 | Durchgangsbohrung |
| 12 | Tränkeventil | 49 | Achsstummel |
| 13 | Betätigungseinheit | | |
| 14 | Wasserauffangschale | | |
| 15 | Gehäuse | | |
| 16 | Ventilstift | | |
| 17 | unterer Endbereich | | |
| 18 | unteres Ende | | |
| 19 | Schalenteil | | |
| 20 | Rand | | |
| 21 | Bodenwand | | |
| 22 | Napf | | |
| 23 | Haltearm | | |
| 24 | Halteclip | | |
| 25 | Steg | | |
| 26 | Rastmittel | | |
| 27 | Durchlass | | |
| 28 | Kragen | | |
| 29 | Betätigungsmittel | | |
| 30 | Arm | | |
| 31 | Arm | | |
| 32 | Längsmittelachse | | |
| 33 | Stab | | |
| 34 | Rille | | |
| 35 | Flügel | | |
| 36 | Rinne | | |
| 37 | Seitenwand | | |
| 38 | Stirnwand | | |
| 39 | Bodenwandung | | |
| 40 | Durchbruch | | |
| 41 | Drehachse | | |

## Patentansprüche

1. Tiertränke, insbesondere für Schnabeltiere, mit mindestens einem einer Wasserversorgungsleitung (10) zugeordneten Tränkeventil (12), das einen zur Wasserabgabe bewegbaren und mit einem Endbereich (17) nach unten aus einem Gehäuse (15) des mindestens einen Tränkeventils (12) herausragenden Ventilstift (16) aufweist, mit einer ein verschwenkbares, längliches Betätigungsmittel (29) für den Ventilstift (16) aufweisenden Betätigungseinheit (13) zum bedarfsweisen Öffnen des jeweiligen Tränkeventils (12), wenigstens einem dem zum mindestens einen Tränkeventil (12) weisenden Ende des Betätigungsmittels (29) zugeordneten zur Seite weisenden Arm (30, 31), der mit dem mindestens einen Tränkeventil (12) korrespondiert, und mit einer Wasserauffangschale (14), **dadurch gekennzeichnet, dass** der gleichen Betätigungseinheit (13) zwei Tränkeventile (12) zugeordnet sind und dem oberen Ende des Betätigungsmittels (29) zwei zu gegenüberliegenden Seiten des Betätigungsmittels (29) abstehende Arme (30, 31) zugeordnet sind, wobei jeder Arm (30, 31) mit einem unteren, freien Ende (18) des Ventilstifts (16) eines der beiden Tränkeventile (12) korrespondiert.

2. Tiertränke nach Anspruch 1, **dadurch gekennzeichnet, dass** sich der jeweilige Arm (30, 31) mindestens bis zum unteren freien Ende (18) des Ventilstifts (16) des ihm zugeordneten Tränkeventils (12) erstreckt.

3. Tiertränke nach Anspruch 1 oder 2, **dadurch gekennzeichnet, dass** der jeweilige Arm (30, 31) im Wesentlichen quergerichtet zur Längsmittelachse (32) des Betätigungsmittels (29) seitlich vom Betätigungsmittel (29) absteht.

4. Tiertränke nach Anspruch 1, **dadurch gekennzeichnet, dass** die Betätigungseinheit (13) um eine quer zu ihrer im unbetätigten Zustand etwa vertikalen Längsmittelachse (32) verlaufende Drehachse (41) verschwenkbar ist.

5. Tiertränke nach Anspruch 4, **dadurch gekennzeichnet, dass** die Drehachse (41) quer zur im Wesentlichen horizontalen Längsachse der Wasserversorgungsleitung (10) verläuft.

6. Tiertränke nach Anspruch 4, **dadurch gekennzeichnet, dass** die Drehachse (41) einem ortsfest unter der Wasserversorgungsleitung (10) angeordneten Drehlager (42) zugeordnet ist.

7. Tiertränke nach Anspruch 6, **dadurch gekennzeichnet, dass** das Drehlager (42) an der Wasserversorgungsleitung (10) befestigt ist.

8. Tiertränke nach Anspruch 6, **dadurch gekennzeichnet, dass** das Drehlager (42) an einer Aufhängung der Wasserauffangschale (14) an der Wasserversorgungsleitung (10) angeordnet ist.

9. Tiertränke nach Anspruch 4, **dadurch gekennzeichnet, dass** die Drehachse (41) einem zur Wasserversorgungsleitung (10) weisenden Endbereich des Betätigungsmittels (29) zugeordnet ist.

10. Tiertränke nach Anspruch 1, **dadurch gekennzeichnet, dass** der jeweilige Arm (30, 31) am oberen Ende des Betätigungsmittels (29) als eine oben offene Rinne (36) ausgebildet ist oder eine oben offene Rinne (36) aufweist.

11. Tiertränke nach Anspruch 10, **dadurch gekennzeichnet, dass** ein Teil einer Bodenwandung (39) der Rinne (36) jedes Arms (30, 31) mit dem freien, unteren Ende (18) des Ventilstifts (16) des jeweiligen Tränkeventils (12) korrespondiert.

12. Tiertränke nach Anspruch 10, **dadurch gekennzeichnet, dass** ein Teil einer Bodenwandung (39) der Rinne (36) jedes Arms (30, 31) mit dem freien, unteren Ende (18) des Ventilstifts (16) des jeweiligen Tränkeventils (12) derart korrespondiert, dass beim Verschwenken des Betätigungsmittels (29) ein jeweiliger Ventilstift (16) anhebbar ist.

13. Tiertränke nach Anspruch 10, **dadurch gekennzeichnet, dass** die Rinne (36) jedes Arms (30, 31) am oberen Endbereich des Betätigungsmittels (29) sich bis zum oberen Endbereich des Betätigungsmittels (29) erstreckt.

14. Tiertränke nach Anspruch 1, **dadurch gekennzeichnet, dass** das Betätigungsmittel (29) zumindest größtenteils stabartig ausgebildet ist.

15. Tiertränke nach Anspruch 1, **dadurch gekennzeichnet, dass** das Betätigungsmittel (29) als ein Rohr ausgebildet ist und mindestens eine obere Öffnung zur Zufuhr von Wasser aufweist.

## Claims

1. An animal drinker, in particular for beaked animals, having at least one drinker valve (12) which is assigned to a water supply line (10) and which has a valve pin (16) which is movable for dispensing water and by way of an end region (17) protrudes downward from a housing (15) of the at least one drinker valve (12), having an activation unit (13) which for opening as required the respective drinker valve (12) has a pivotable elongate activation means (29) for the valve pin (16), an end of the activation means (29) that points toward the at least one drinker valve (12) is assigned at least one arm (30, 31) which points sideways and which communicates with the at least one drinker valve (12) and having a water collection tray (14), **characterized in that** two drinker valves (12) are assigned to the same activation unit (13) and the upper end of the activation means (29) is assigned two arms (30, 31) which project on two opposite sides of the activation means (29), wherein each arm (30, 31) communicates with a lower free end (18) of the valve pin (16) of one of the two drinker valves (12).

2. The animal drinker as claimed in claim 1, **characterized in that** the respective arm (30, 31) extends at least up to the lower free end (18) of the valve pin (16) assigned to the drinker valve (12).

3. The animal drinker as claimed in claim 1 or 2, **characterized in that** the respective arm (30, 31) projects laterally from the activation means (29) so as to be oriented substantially transversely to the longitudinal central axis (32) of the activation means (29).

4. The animal drinker as claimed in claim 1, **characterized in that** the activation unit (13) is pivotable about a rotation axis (41) which runs transversely to the longitudinal central axis (32) of said activation unit (13) that in the non-activated state is approximately vertical.

5. The animal drinker as claimed in claim 4, **characterized in that** the rotation axis (41) runs transversely to the substantially horizontal longitudinal axis of the water supply line (10).

6. The animal drinker as claimed in claim 4, **characterized in that** the rotation axis (41) is assigned to a rotary bearing (42) which is disposed so as to be locationally fixed below the water supply line (10).

7. The animal drinker as claimed in claim 6, **characterized in that** the rotary bearing (42) is fastened to the water supply line (10).

8. The animal drinker as claimed in claim 6, **characterized in that** the rotary bearing (42) is disposed on a suspension of the water collection tray (14) on the water supply line (10).

9. The animal drinker as claimed in claim 4, **characterized in that** the rotation axis (41) is assigned to an end region of the activation means (29) that points toward the water supply line (10).

10. The animal drinker as claimed in claim 1, **characterized in that** the respective arm (30, 31) at the upper end of the activation means (29) is configured as a channel (36) which is open at the top, or has a channel (36) which is open at the top.

11. The animal drinker as claimed in claim 10, **characterized in that** part of a base wall (39) of the channel (36) of each arm (30, 31) communicates with the free lower end (18) of the valve pin (16) of the respective drinker valve (12).

12. The animal drinker as claimed in claim 10, **characterized in that** part of a base wall (39) of the channel (36) of each arm (30, 31) communicates with the free lower end (18) of the valve pin (16) of the respective drinker valve (12) in such a manner that a respective valve pin (16) is able to be lifted when pivoting the activation means (29).

13. The animal drinker as claimed in claim 10, **characterized in that** the channel (36) of each arm (30, 31) at the upper end region of the activation means (29) extends up to the upper end region of the activation means (29).

14. The animal drinker as claimed in claim 1, **characterized in that** the activation means (29) is at least largely configured in the manner of a rod.

15. The animal drinker as claimed in claim 1, **characterized in that** the activation means (29) is configured as a pipe and has at least one upper opening for infeeding water.

## Revendications

1. Abreuvoir, en particulier pour animaux à bec, comportant au moins un robinet d'abreuvoir (12) associé à une conduite d'alimentation en eau (10), lequel robinet d'abreuvoir comprend une tige de robinet (16) mobile pour la distribution d'eau et faisant saillie par une région d'extrémité (17) vers le bas hors d'un boîtier (15) de l'au moins un robinet d'abreuvoir (12), comportant une unité d'actionnement (13) comprenant un moyen d'actionnement (29) pivotant allongé pour la tige de robinet (16) pour ouvrir au besoin le robinet d'abreuvoir (12) respectif, au moins un bras (30, 31) tourné vers le côté et associé à l'extrémité du moyen d'actionnement (29) tournée vers l'au moins un robinet d'abreuvoir (12), lequel bras correspond à l'au moins un robinet d'abreuvoir (12), et comportant un bac de collecte d'eau (14), **caractérisé en ce que** deux robinets d'abreuvoir (12) sont associés à la même unité d'actionnement (13) et deux bras (30, 31) faisant saillie vers des côtés opposés du moyen d'actionnement (29) sont associés à l'extrémité supérieure du moyen d'actionnement (29), chaque bras (30, 31) correspondant à une extrémité inférieure libre (18) de la tige de robinet (16) de l'un des deux robinets d'abreuvoir (12).

2. Abreuvoir selon la revendication 1, **caractérisé en ce que** le bras (30, 31) respectif s'étend au moins jusqu'à l'extrémité inférieure libre (18) de la tige de robinet (16) du robinet d'abreuvoir (12) qui lui est associé.

3. Abreuvoir selon la revendication 1 ou 2, **caractérisé en ce que** le bras (30, 31) respectif fait saillie latéralement à partir du moyen d'actionnement (29) sensiblement de manière orientée transversalement à l'axe médian longitudinal (32) du moyen d'actionnement (29).

4. Abreuvoir selon la revendication 1, **caractérisé en ce que** l'unité d'actionnement (13) peut pivoter autour d'un axe de rotation (41) s'étendant transversalement à son axe médian longitudinal (32) approximativement vertical dans l'état non actionné.

5. Abreuvoir selon la revendication 4, **caractérisé en ce que** l'axe de rotation (41) s'étend transversalement à l'axe longitudinal sensiblement horizontal de la conduite d'alimentation en eau (10).

6. Abreuvoir selon la revendication 4, **caractérisé en ce que** l'axe de rotation (41) est associé à un palier rotatif (42) disposé de manière fixe en dessous de la conduite d'alimentation en eau (10).

7. Abreuvoir selon la revendication 6, **caractérisé en ce que** le palier rotatif (42) est fixé à la conduite d'alimentation en eau (10).

8. Abreuvoir selon la revendication 6, **caractérisé en ce que** le palier rotatif (42) est disposé sur une suspension du bac de collecte d'eau (14) sur la conduite d'alimentation en eau (10).

9. Abreuvoir selon la revendication 4, **caractérisé en ce que** l'axe de rotation (41) est associé à une région d'extrémité du moyen d'actionnement (29) tournée vers la conduite d'alimentation en eau (10).

10. Abreuvoir selon la revendication 1, **caractérisé en ce que** le bras respectif (30, 31) à l'extrémité supérieure du moyen d'actionnement (29) est réalisé sous la forme d'un canal (36) ouvert vers le haut ou comprend un canal (36) ouvert vers le haut.

11. Abreuvoir selon la revendication 10, **caractérisé en ce qu'**une partie d'une paroi de fond (39) du canal (36) de chaque bras (30, 31) correspond à l'extrémité inférieure libre (18) de la tige de robinet (16) du robinet d'abreuvoir (12) respectif.

12. Abreuvoir selon la revendication 10, **caractérisé en ce qu'**une partie d'une paroi de fond (39) du canal (36) de chaque bras (30, 31) correspond à l'extrémité inférieure libre (18) de la tige de robinet (16) du robinet d'abreuvoir (12) respectif, de telle sorte que, lors du pivotement du moyen d'actionnement (29), une tige de robinet (16) respective peut être soulevée.

13. Abreuvoir selon la revendication 10, **caractérisé en ce que** le canal (36) de chaque bras (30, 31) au niveau de la région d'extrémité supérieure du moyen d'actionnement (29) s'étend jusqu'à la région d'extrémité supérieure du moyen d'actionnement (29).

14. Abreuvoir selon la revendication 1, **caractérisé en ce que** le moyen d'actionnement (29) est réalisé en forme de barre au moins en grande partie.

15. Abreuvoir selon la revendication 1, **caractérisé en ce que** le moyen d'actionnement (29) est réalisé sous la forme d'un tube et comprend au moins une ouverture supérieure pour l'amenée d'eau.
